# FASCICULE DE BREVET EUROPEEN

(11) **EP 1 663 697 B1**
(45) Date de publication et mention de la délivrance du brevet: **28.01.2009**
(21) Numéro de dépôt: 04787293.2
(22) Date de dépôt: 02.09.2004
(51) Int. Cl.: B60N 2/015

(54) **DISPOSITIF DE VERROUILLAGE DE SIEGE AUTOMOBILE AMOVIBLE**
VORRICHTUNG ZUR VERRIEGELUNG EINES ENTFERNBAREN AUTOSITZES
DEVICE FOR LOCKING A REMOVABLE CAR SEAT

(30) Priorité: 09.09.2003 FR 0310599
(43) Date de publication de la demande: 07.06.2006
(73) Titulaire: RENAULT S.A.S., 92100 Boulogne Billancourt (FR)
(72) Inventeur: BROISIN DOUTAZ, Marc, F-92700 Colombes (FR); HLUBINA, Thierry, F-92370 Chaville (FR)
(74) Mandataire: Guyon, Rodolphe C.
(86) Numéro de dépôt international: PCT/FR2004/002238
(87) Numéro de publication internationale: WO 2005/028244

(56) Documents cités:
- FR-A- 2 699 973
- FR-A- 2 735 810
- FR-A- 2 785 240
- FR-A- 2 824 524
- PATENT ABSTRACTS OF JAPAN vol. 1998, no. 12, 31 octobre 1998 (1998-10-31) & JP 10 194017 A (HASHIMOTO FORMING IND CO LTD), 28 juillet 1998 (1998-07-28)

## Description

La présente invention concerne un dispositif de verrouillage d'un siège automobile amovible sur le plancher d'un véhicule automobile.

Divers dispositifs de verrouillage destinés aux sièges automobiles amovibles sont déjà connus, qu'il s'agisse, par exemple, de verrous du type comportant des crochets, lesdits crochets comportant au moins une partie mobile en rotation autour d'un axe destinée à venir enserrer, lors du verrouillage, un élément de forme générale cylindrique placé, par exemple, dans une cavité débouchant ménagée dans le plancher du véhicule, ou qu'il s'agisse, notamment, de verrous du type comprenant un pêne comportant un corps de verrouillage de forme générale cylindrique, ledit corps de verrouillage étant destiné à être verrouillé par encliquetage dans l'orifice d'une gâche placée dans une cavité débouchant aménagée dans le plancher du véhicule. Dans ce dernier cas, les moyens encliquetage comportent, par exemple, ainsi qu'il est présenté dans les documents FR 2699973 et FR 2735810, un ensemble de billes escamotables, ainsi qu'un dispositif de blocage permettant d'éviter tout déverrouillage intempestif.

D'une manière générale, les systèmes de verrouillage du type comportant des crochets sont plutôt destinés aux pieds du siège amovible situés vers l'avant du véhicule, et les systèmes de verrouillage du type comportant un pêne composé d'un corps de verrouillage verrouillé par encliquetage sont plutôt destinés aux pieds du siège amovible situés vers l'arrière du véhicule.

Dans tous les cas, ces systèmes permettent une mise en place relativement rapide et aisée du siège amovible, tout en assurant, lorsque ledit siège est en place, un niveau d'immobilisation et de sécurité correct, et en évitant les déverrouillages intempestifs.

On a cependant constaté un inconvénient lié à ces dispositifs. Lorsque ledit siège est retiré de son emplacement, ce qui est l'une des configurations recherchées pour des véhicules dits "monospace", par exemple, l'orifice de la cavité débouchante ménagée dans le plancher dudit véhicule pour le verrouillage dudit siège est laissé ouvert. Il existe alors un risque de chute d'objets de petite taille dans ladite cavité par l'intermédiaire dudit orifice, lesdits objets pouvant, dans certains cas, interdire totalement la mise en place ultérieure dudit siège, ou risquant, dans d'autres cas, de n'autoriser qu'un verrouillage incomplet dudit siège, induisant alors un danger potentiel en cas de choc, par exemple.

La présence de ces orifices ouverts nuit en outre également à la perception esthétique que l'utilisateur a de l'habitacle de son véhicule.

Certains constructeurs pallient cet inconvénient en fournissant à l'utilisateur une plaque de forme générale plane, généralement réalisée en plastique, amovible, que l'utilisateur met en place sur ledit orifice afin de l'obturer au retrait du siège, et retire au moment de la mise en place dudit siège.

Cette solutions simple et peu coûteuse, présente toutefois un certain nombre d'inconvénients. En premier lieu existe le risque d'oubli du retrait de ladite plaque lors de la mise en place du siège amovible, pouvant conduire, outre l'endommagement de ladite plaque, à un mauvais verrouillage dudit siège, induisant alors de mauvaises conditions de sécurité dans l'utilisation dudit siège.

Cette solution n'apporte par ailleurs pas toujours une amélioration de la qualité esthétique perçue par l'utilisateur lorsque ledit siège est retiré.

Ladite plaque peut, enfin, être égarée par l'utilisateur, lesdits orifices accueillant les systèmes de verrouillage étant alors à nouveau laissés ouverts.

La Demanderesse a eu connaissance d'une autre solution proposée par un constructeur dans le cadre du véhicule PEUGEOT 307 SW. Selon cette solution, il a été proposé une lame d'obturation élastique de forme allongée destinée à venir obturer la partie inférieure de l'orifice de blocage dans lequel vient se verrouiller l'organe de verrouillage à billes ; lorsque l'organe de verrouillage est introduit dans l'orifice de blocage, la lame d'obturation cède élastiquement et s'escamote suffisamment sous l'orifice pour ne pas gêner le verrouillage. Lorsque l'organe de verrouillage est retiré, la lame reprend élastiquement sa position obturation. Dans cette solution connue, la lame doit être introduite et fixée par une seconde cavité pratiquée au voisinage de la première cavité, et sa fixation très en porte-à-faux et dans des conditions peu pratiques entraîne parfois des décrochements de la lame et donc l'impossibilité de jouer son rôle d'obturateur.

Du document FR 2 824 524 on connaît un dispositif de verrouillage, qui montre les caractéristiques du préambule de la revendication 1.

La présente invention a pour but de pallier les inconvénients des solutions connues, à la fois sur le plan esthétique et fonctionnel, et de proposer un dispositif de verrouillage permettant une mise en place aisée au montage et un fonctionnement satisfaisant et simple pour l'utilisateur lors de la mise en place et du retrait du siège amovible, d'améliorer la qualité perçue du véhicule lorsque ledit siège est déverrouillé, et de limiter les risques de mauvais verrouillage dudit siège lors de sa mise en place.

La présente invention atteint son but grâce à un dispositif de verrouillage d'un siège amovible sur un plancher d'un véhicule automobile, du type comprenant le plancher avec une cavité de verrouillage située dans le plancher et un organe de verrouillage mobile apte à être situé sous le siège et susceptible de prendre une position de verrouillage dans laquelle l'organe de verrouillage pénètre dans ladite cavité et coopère avec un organe de blocage fixe par rapport à la cavité pour verrouiller le siège et une position de déverrouillage dans laquelle l'organe de verrouillage est disposé hors de la cavité, la cavité comportant un opercule mobile disposé à demeure dans la cavité et susceptible de prendre une position de fermeture dans laquelle il forme une obturation plane sensiblement supérieure de la cavité et une position escamotée dans laquelle il s'escamote dans ladite cavité en laissant le passage à l'organe de verrouillage, le passage de la position escamotée à la position de fermeture se faisant par des moyens de rappel élastique et le passage de la position de fermeture à la position escamotée se faisant sous la force de l'organe de verrouillage pénétrant dans la cavité à l'encontre desdits moyens de rappel, caractérisé en ce que le dispositif comprend une pièce de fixation venant se fixer dans et/ou autour de la cavité et comportant d'une part l'organe fixe de blocage et d'autre part l'opercule mobile disposé avec ses moyens de rappel élastique en pivotement sous l'organe fixe de blocage.

Ainsi, selon l'invention, une seule cavité est nécessaire au contraire de la solution antérieure et la mise en place du dispositif de l'invention peut si on le désire s'effectuer en une seule opération qui fixe à la fois l'organe de blocage coopérant avec l'organe mobile de verrouillage et l'opercule mobile destiné à venir obturer de manière escamotable la cavité au niveau dudit organe de blocage, à condition savoir préparé au préalable la pièce de fixation. Il est cependant également possible de fixer d'abord ladite pièce de fixation dans la cavité avant de fixer sur ladite pièce l'organe de blocage et l'opercule mobile.

Avantageusement, la pièce de fixation comprend une cuvette; en tôle emboutie ou en plastique, qui vient se fixer par ses bordures sur le plancher, à la périphérie de la cavité, par exemple par soudure.

La cuvette permet de limiter la grandeur de la cavité. D'autre part, la cuvette peut comporter des reliefs ou des structures permettant d'y disposer et fixer sur elle facilement l'organe de blocage et l'opercule mobile.

Danse un mode de réalisation préféré de l'invention, ledit opercule mobile est constitué d'une plaque ou languette mince, métallique ou plastique. Les moyens de rappel peuvent être constitués par l'élasticité intrinsèque de la languette et/ou par un ressort de rappel associé à elle.

Avantageusement, l'organe de verrouillage est un organe coulissant. Il comporte de préférence un élément assurant le verrouillage dudit organe par encliquetage dans l'organe de blocage. Il peut notamment s'agir d'un pêne à billes escamotables destinées à assurer le blocage dudit organe en position verrouillée par encliquetage dans ledit organe de blocage, lequel consiste alors avantageusement en un simple orifice prévu dans une plaque de blocage.

Alternativement, le verrouillage peut être assuré par un élément mobile en rotation autour d'un axe, ledit élément mobile en rotation venant enserrer un élément fixe, de forme générale cylindrique, placé dans la cavité du plancher.

D'autres caractéristiques et avantages de l'invention ressortiront à la lecture de la description qui suit, en référence aux dessins annexés, dans lesquels :
- la figure 1 est une vue en coupe selon un plan sensiblement vertical d'un mode de réalisation de l'invention, dans laquelle l'organe mobile de verrouillage à billes escamotables est représenté en position déverrouillée, l'opercule d'obturation étant en place,
- la figure 2 est une vue en coupe similaire à la figure 1, dans ledit organe de verrouillage est en position verrouillée et l'opercule d'obturation est en position escamotée,
- la figure 3 est une vue en perspective du mode de réalisation des figures 1 et 2.

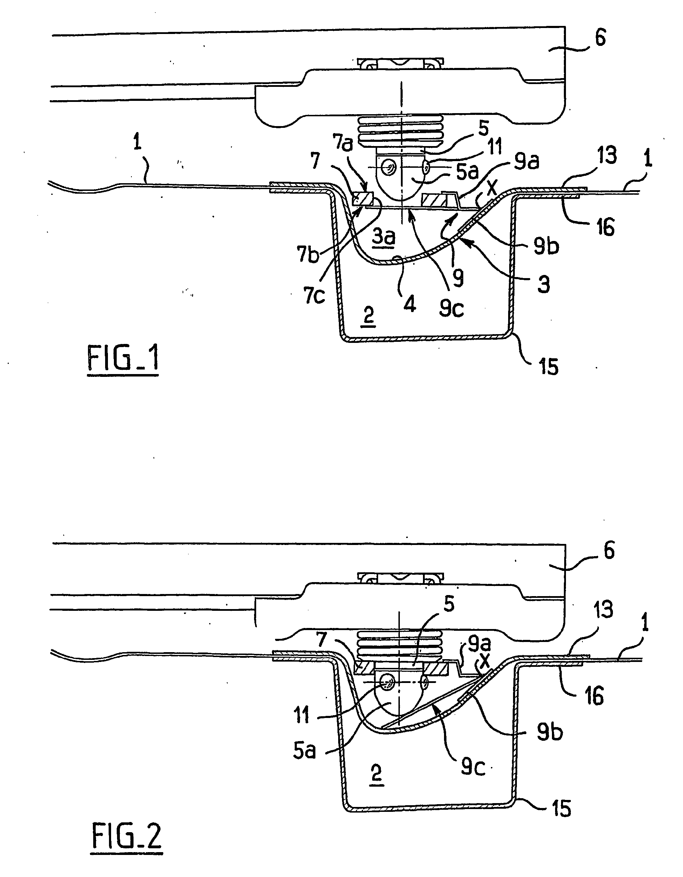

Ainsi que le montrent les figures 1 et 2, une cavité 2 est ménagée dans le plancher 1 d'un véhicule automobile, ladite cavité 2 débouchant vers le haut. Cette cavité sert à loger le dispositif de verrouillage destiné à immobiliser un pêne de fixation 5 d'un siège amovible 6. Ce pêne de fixation, mobile en translation, comporte de façon connue en soi des billes escamotables 11 à l'arrière d'une partie arrondie de pénétration 5a.

Conformément à l'invention, la cavité 2 est équipée d'une pièce ou boîtier de fixation 3, généralement constitué d'une plaque de tôle formée en cuvette 4 (par exemple par emboutissage) de manière à épouser partiellement ou en totalité à forme de ladite cavité 2, et définir un volume 3a restreint débouchant vers le haut. Le boîtier 3 comporte autour de la cuvette 4 une bordure périphérique plane 13 qui est rendue solidaire du plancher 1 du véhicule par des moyens connus et non représentés sur les figures, notamment par soudure. Cette solidarisation peut n'intervenir qu'une fois le boîtier équipé de la pièce de blocage et de l'opercule mobile qu'on va maintenant décrire.

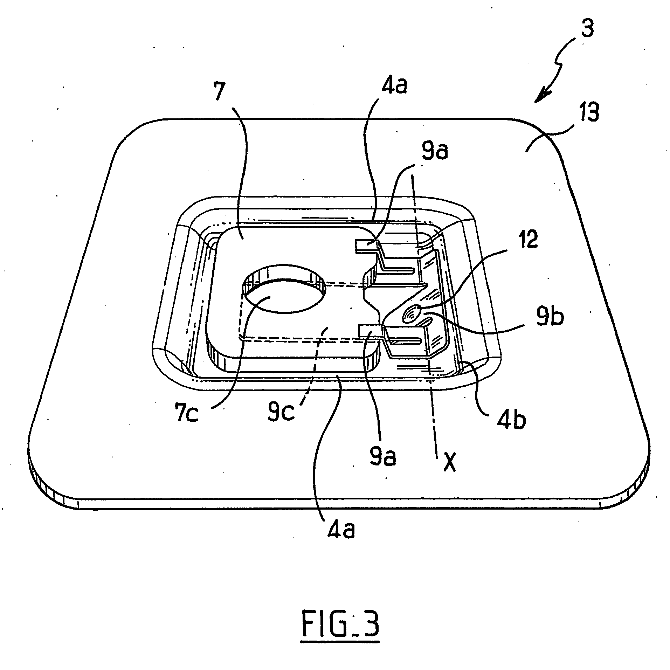

Le volume 3a défini par le boîtier 3 accueille à sa partie supérieure la pièce de blocage 7 formant gâche destinée à coopérer avec le pêne 5 à billes escamotables. Cette pièce de blocage 7 est sous forme d'une plaque de tôle formant gâche et munie d'un orifice 7c, la plaque étant solidarisée à la cuvette 4. Par exemple, la cuvette 4 qui est de forme sensiblement rectangulaire à sa partie supérieure (cf. figure 3) peut comporter sur les parois latérales formant ses deux côtés longitudinaux 4a des épaulements non représentés sur lesquels la plaque 7 peut être appuyée latéralement et soudée.

Le volume 3a accueille aussi l'opercule d'obturation 9. Celui-ci est formé par une pièce métallique en tôle mince (quelque millimètres) découpée et formée ou une pièce plastique mince conformée pour présenter au moins une partie allongée en lamelle ou languette 9c venant s'articuler de manière élastique (par exemple par un pliage sur l'axe X) sur une partie de fixation ou semelle 9b en T formée en tête de la pièce : cette partie de fixation peut être fixée, par exemple soudée, ou rivetée par un rivet 12, à une paroi latérale 4b de la cuvette 4, conformée à cet effet. La pièce peut aussi comporter deux pattes latérales 9a formée en Z, partant des branches de la partie de fixation 9b, et positionnées et fixées sur la face supérieure 7a de la pièce de blocage 7. La lamelle centrale 9c dégagée par les découpes définissant les pattes 9a et la partie de fixation 9b est alors plaquée contre la face inférieure 7b de la gâche 7, assurant ainsi l'obturation de l'orifice 7c de la gâche 7 destiné à coopérer avec l'extrémité de verrouillage 5a (voir figure 1).

Du fait de l'élasticité du matériau qui constitue l'opercule mobile 9 (élasticité liée, par exemple, à l'épaisseur de la tôle), d'une part, et de la forme générale dudit opercule mobile 9, d'autre part, la lamelle 9c est mobile en rotation autour d'un axe X sensiblement horizontal et défini par l'intersection de la surface de ladite lamelle 9c et de la surface de la partie de fixation 9b. Ladite lamelle 9c peut ainsi se comporter comme un ressort du type ressort à lame.

Lorsque le siège amovible 6 est installé sur le plancher 1, l'extrémité de verrouillage 5a se positionne dans l'orifice 7c de la gâche 7. Sous l'effet du poids du siège amovible 6, et compte tenu de la forme et de l'élasticité de l'opercule mobile 9, la lamelle 9c entre en rotation autour de l'axe X et vers le fond du boîtier 3, entraînant alors le dégagement de l'orifice 7c précédemment obturé par ladite lamelle 9c, et autorisant la pénétration, puis le verrouillage, de l'extrémité de verrouillage 5a (voir figure 2).

Lors du retrait du siège amovible 6 (voir figure 1), l'extrémité de verrouillage 5a est retiré de l'orifice 7c de la gâche 7. La configuration de l'ensemble de l'opercule mobile 9, combinée à l'élasticité naturelle du matériau formant ledit opercule mobile 9 - qui forme un ressort de rappel de type ressort à lame ainsi que précédemment évoqué -, contribue alors à ramener la lamelle 9c dans sa position initiale de plaquage contre la face inférieure 7b de la gâche 7, obturant à nouveau l'orifice 7c de ladite gâche 7.

De manière alternative ou additionnelle, un ressort de rappel de type ressort à lame ou autre peut être associé à la lamelle 9c de l'opercule mobile 9, afin de créer ou renforcer l'effet de rappel et le plaquage de ladite lamelle 9c lors du retrait du siège amovible 6.

Selon une autre variante de l'invention, non représentée, l'organe de verrouillage pourrait être un crochet et l'organe de blocage être constitué d'un barreau d'accrochage disposé dans le boîtier 3, le crochet ou le barreau comportant des parties escamotables pour permettre un dégagement.

Le dispositif selon l'invention peut donc être mis en oeuvre indifféremment pour les orifices de verrouillage correspondant aux pieds d'un siège situés vers l'avant d'un véhicule et pour les orifices de verrouillage correspondant aux pieds d'un siège situés vers l'arrière dudit véhicule.

Le dispositif de l'invention peut être mis en place au-dessus d'une cavité quelconque. Si nécessaire, la cavité peut être délimitée par un boîtier inférieur 15 possédant une bride périphérique 16 de fixation qui vient s'appuyer sur le plancher au bord de l'ouverture de la cavité, et peut servir à une meilleure fixation de la bordure 13 du boîtier supérieur 3.

Le dispositif de l'invention est simple, et d'une mise en oeuvre peu coûteuse et compatible avec une production en grande série.

## Revendications

1. Dispositif de verrouillage d'un siège amovible (6) sur un plancher (1) d'un véhicule automobile, du type comprenant le plancher (1) avec une cavité de verrouillage (2) située dans le plancher (1) et un organe de verrouillage mobile (5) apte à être situé sous le siège et susceptible de prendre une position de verrouillage dans laquelle l'organe de verrouillage (5) pénètre dans ladite cavité (2) et coopère avec un organe de blocage (7) fixe par rapport à la cavité (2) pour verrouiller le siège et une position de déverrouillage dans laquelle l'organe de verrouillage (5) est disposé hors de la cavité (2), la cavité (2) comportant un opercule (9c) mobile disposé à demeure dans la cavité (2) et susceptible de prendre une position de fermeture dans laquelle il forme une obturation plane sensiblement supérieure de la cavité (2) et une position escamotée dans laquelle il s'escamote dans ladite cavité (2) en laissant le passage à l'organe de verrouillage (5), le passage de la position escamotée à la position de fermeture se faisant par des moyens de rappel élastique et le passage de la position de fermeture à la position escamotée se faisant sous la force de l'organe de verrouillage (5) pénétrant dans la cavité à l'encontre desdits moyens de rappel, **caractérisé en ce que** le dispositif comprend une pièce (3) venant se fixer dans et/ou autour de la cavité et comportant d'une part l'organe fixe de blocage (7) et d'autre part l'opercule mobile (9c) disposé avec ses moyens de rappel élastique en pivotement sous l'organe fixe de blocage (7).

2. Dispositif de verrouillage selon la revendication 1, **caractérisé en ce que** la pièce de fixation (3) comprend une cuvette (4) entourée par une bordure (13) venant se fixer sur le plancher (1) à la périphérie de la cavité.

3. Dispositif de verrouillage selon l'une quelconque des revendications 1 ou 2, **caractérisé en ce que** la cuvette (4) comporte des reliefs ou des structures permettant d'y disposer et fixer sur elle l'organe de blocage (7) et l'opercule mobile (9).

4. Dispositif de verrouillage selon l'une quelconque des revendications 1 à 3, **caractérisé en ce que** ledit opercule mobile (9) est constitué d'une lamelle mince (9c).

5. Dispositif selon la revendication 4, **caractérisé en ce que** les moyens de rappel sont constitués par l'élasticité intrinsèque de la lamelle (9c).

6. Dispositif de verrouillage selon l'une quelconque des revendications 4 ou 5, **caractérisé en ce que** les moyens de rappel sont constitués par un ressort associé à la lamelle (9c).

7. Dispositif selon l'une quelconque des revendications 1 à 6, **caractérisé en ce que** ledit organe de verrouillage (5) est un organe coulissant.

8. Dispositif selon la revendication 7, **caractérisé en ce que** ledit organe coulissant assure le verrouillage par encliquetage dans l'organe de blocage (7).

9. Dispositif selon la revendication 8, **caractérisé en ce que** ledit organe coulissant (5) comporte un ensemble de billes escamotables (11).

10. Dispositif de verrouillage selon l'une quelconque des revendications 1 à 9, **caractérisé en ce que** l'organe de blocage est sous forme de plaque de blocage (7) comportant un orifice (7c).

## Claims

1. Device for locking a removable seat (6) on a floor (1) of a motor vehicle, of the type comprising the floor (1) with a locking cavity (2) situated in the floor (1) and a movable locking member (5) capable of being situated beneath the seat and able to take a locked position in which the locking member (5) penetrates the said cavity (2) and interacts with an immobilization member (7) that is fixed relative to the cavity (2) in order to lock the seat and an unlocked position in which the locking member (5) is placed outside the cavity (2), the cavity (2) comprising a movable cover (9c) permanently placed in the cavity (2) and able to take a closed position in which it forms a substantially upper flat blanking of the cavity (2) and a retracted position in which it retracts into the said cavity (2) allowing the locking member (5) to pass, the passage from the retracted position to the closed position being achieved by elastic return means and the passage from the closed position to the retracted position being under the force of the locking member (5) penetrating the cavity against the said return means, **characterized in that** the device comprises a part (3) that is fixed in and/or around the cavity and that comprises on the one hand the fixed immobilization member (7) and on the other hand the movable cover (9c) placed with its elastic return means pivotingly beneath the fixed immobilization member (7).

2. Locking device according to Claim 1, **characterized in that** the attachment part (3) comprises a well (4) surrounded by a border (13) that is attached to the floor (1) on the periphery of the cavity.

3. Locking device according to either one of Claims 1 or 2, **characterized in that** the well (4) comprises protrusions or structures making it possible to place therein and attach thereto the immobilization member (7) and the movable cover (9).

4. Locking device according to any one of Claims 1 to 3, **characterized in that** the said movable cover (9) consists of a thin strip (9c).

5. Device according to Claim 4, **characterized in that** the return means consist of the intrinsic elasticity of the strip (9c).

6. Locking device according to either one of Claims 4 and 5, **characterized in that** the return means consist of a spring associated with the strip (9c).

7. Device according to any one of Claims 1 to 6, **characterized in that** the said locking member (5) is a sliding member.

8. Device according to Claim 7, **characterized in that** the said sliding member ensures the locking by snap-fitting in the immobilization member (7).

9. Device according to Claim 8, **characterized in that** the said sliding member (5) comprises a set of retractable balls (11).

10. Locking device according to any one of Claims 1 to 9, **characterized in that** the immobilization member is in the form of an immobilization plate (7) comprising an orifice (7c).

## Patentansprüche

1. Vorrichtung zur Verriegelung eines entfernbaren Sitzes (6) an einem Boden (1) eines Kraftfahrzeugs, von dem Typ, der den Boden (1) mit einem im Boden (1) befindlichen Verriegelungshohlraum (2) und ein bewegliches Verriegelungsorgan (5) aufweist, das sich unter dem Sitz befinden und eine Verriegelungsstellung, in der das Verriegelungsorgan (5) in den Hohlraum (2) eindringt und mit einem bezüglich des Hohlraums (2) ortsfesten Blockierorgan (7) zusammenwirkt, um den Sitz zu verriegeln, und eine Entriegelungsstellung einnehmen kann, in der das Verriegelungsorgan (5) außerhalb des Hohlraums (2) angeordnet ist, wobei der Hohlraum (2) eine bewegliche Abdeckung (9c) aufweist, die auf Dauer im Hohlraum (2) angeordnet ist und eine Schließstellung, in der sie einen ebenen, im Wesentlichen oberen Verschluss des Hohlraums (2) bildet, und eine versenkte Stellung einnehmen kann, in der sie sich in den Hohlraum (2) versenkt und den Weg für das Verriegelungsorgan (5) freigibt, wobei der Übergang von der versenkten Stellung in die Schließstellung durch elastische Rückstellmittel, und der Übergang von der Schließstellung in die versenkte Stellung unter der Kraft des Verriegelungsorgans (5) erfolgt, das gegen die Wirkung der Rückstellmittel in den Hohlraum eindringt, **dadurch gekennzeichnet, dass** die Vorrichtung ein Bauteil (3) aufweist, das in dem und/oder um den Hohlraum herum befestigt wird und einerseits das ortsfeste Blockierorgan (7) und andererseits die bewegliche Abdeckung (9c) aufweist, die mit ihren elastischen Rückstellmitteln schwenkbar unter dem ortsfesten Blockierorgan (7) angeordnet ist.

2. Verriegelungsvorrichtung nach Anspruch 1, **dadurch gekennzeichnet, dass** das Befestigungsbauteil (3) eine Mulde (4) umgeben von einem Rand (13) aufweist, der am Boden (1) am Umfang des Hohlraums befestigt wird.

3. Verriegelungsvorrichtung nach einem der Ansprüche 1 oder 2, **dadurch gekennzeichnet, dass** die Mulde (4) Reliefs oder Strukturen aufweist, die es ermöglichen, das Blockierorgan (7) und die bewegliche Abdeckung (9) dort anzuordnen und an ihr zu befestigen.

4. Verriegelungsvorrichtung nach einem der Ansprüche 1 bis 3, **dadurch gekennzeichnet, dass** die bewegliche Abdeckung (9) aus einer dünnen Lamelle (9c) besteht.

5. Verriegelungsvorrichtung nach Anspruch 4, **dadurch gekennzeichnet, dass** die Rückstellmittel aus der Eigenelastizität der Lamelle (9c) bestehen.

6. Verriegelungsvorrichtung nach einem der Ansprüche 4 oder 5, **dadurch gekennzeichnet, dass** die Rückstellmittel aus einer der Lamelle (9c) zugeordneten Feder bestehen.

7. Verriegelungsvorrichtung nach einem der Ansprüche 1 bis 6, **dadurch gekennzeichnet, dass** das Verriegelungsorgan (5) ein gleitendes Organ ist.

8. Verriegelungsvorrichtung nach Anspruch 7, **dadurch gekennzeichnet, dass** das gleitende Organ die Verriegelung durch Einrasten in das Blockierorgan (7) gewährleistet.

9. Verriegelungsvorrichtung nach Anspruch 8, **dadurch gekennzeichnet, dass** das gleitende Organ (5) einen Satz von versenkbaren Kugeln (11) aufweist.

10. Verriegelungsvorrichtung nach einem der Ansprüche 1 bis 9, **dadurch gekennzeichnet, dass** das Blockierorgan die Form einer Blockierplatte (7) mit einer Öffnung (7c) hat.
